# EUROPEAN PATENT SPECIFICATION

(11) **EP 1 044 097 B1**
(45) Date of publication and mention of the grant of the patent: **23.11.2005**
(21) Application number: 98966677.1
(22) Date of filing: 24.12.1998
(51) Int. Cl.: B29D 11/00

(54) **METHOD FOR PRODUCING A HOLOGRAPHIC OPHTHALMIC LENS**
VERFAHREN ZUR HERSTELLUNG EINER HOLOGRAPHISCHEN OPTHALMISCHEN LINSE
PROCEDE DE FABRICATION D'UNE LENTILLE OPHTALMIQUE HOLOGRAPHIQUE

(30) Priority: 29.12.1997 US 999025
(43) Date of publication of application: 18.10.2000
(73) Proprietor: Novartis AG, 4056 Basel (CH); Novartis Pharma GmbH, 1230 Wien (AT)
(72) Inventor: ZHANG, Xiaoxiao, Sewanee, GA 30174 (US)
(74) Representative: de Weerd, Petrus G.W.
(86) International application number: PCT/EP1998/008463
(87) International publication number: WO 1999/033642

(56) References cited:
- EP-A- 0 037 476
- EP-A- 0 404 099
- EP-A- 0 407 772
- EP-A- 0 407 773
- EP-A- 0 435 525
- EP-A- 0 570 120
- WO-A-94/12909
- WO-A-97/13183
- WO-A-97/27519
- GB-A- 2 139 375
- JP-A- 9 178 901
- US-A- 4 310 216
- US-A- 4 913 990
- US-A- 5 182 180
- US-A- 5 331 445

## Description

The present invention relates to a method for producing an ophthalmic lens containing a holographic element.

Ophthalmic lenses, e.g., contact lenses and intraocular lenses, for correcting ametropia and other adverse vision conditions using the refractive power of optically clear polymers are widely available. Ametropia is the term that indicates any condition of refractive visual impairment of the eye, including myopia, hyperopia, prebyopia and astigmatism. Because each ametropic condition requires a specific measure, i.e., a specific corrective power, there need to be a large number of different designs for ophthalmic lenses to accommodate many different visual defects of the eye. For example, just to accommodate different levels of myopic conditions with contact lenses, a range of different single-power contact lenses having from 0 to -10 diopters or even lower, in quarter diopter increments, are produced. The current approach to this accommodation problem is mass producing ophthalmic lenses for common ametropic conditions and then custom manufacturing ophthalmic lenses for uncommon ametropic conditions. However, the current approach does not eliminate the need for designing and producing a large number of ophthalmic lenses having different corrective measures. In addition, the current approach requires a large inventory of stock keeping units of ophthalmic lenses to be carried by lens manufacturers and practitioners in order to accommodate a wide variety of different ametropic conditions.

Additionally, the design limitations of conventional refractive ophthalmic lenses, which rely on the thickness variations of the lenses to provide varying corrective powers, do not allow the ophthalmic lens design to be optimized solely for the comfort of the lens wearer.

There remains a need for a corrective ophthalmic lens that does not have the disadvantages of prior art ophthalmic lenses and can be produced by a simpler production process than the conventional ophthalmic lens production processes.

There is provided in accordance with the present invention, a flexible method for producing optical lenses, more desirably ophthalmic lenses, having a wide range of different powers for correcting diverse ametropic conditions. While JP-A-9178901 describes a method to obtain a distributed refractive index optical material by irradiating the material with UV rays or visible light, US 4,310,216 discloses a method to record a holographic lens by causing the interference of a parallel beam with a divergent beam. Alternatively, optical components containing diffraction gratings may be fabricated employing complex masking processes as in WO 97/27519.
The present method for producing an optical lens for correcting an ametropia of an eye includes the steps of introducing a polymerizable optical material in a mold for an ophthalmic lens, exposing the polymerizable material in the mold to electromagnetic waves, thereby forming a volume holographic element, wherein the electromagnetic waves form a pattern of interference fringes while polymerizing a first layer of said polymerizable material, thereby recording said interference fringe pattern in said first layer to form a volume grating structure, thus forming a first layer of a combination volume holographic element, wherein further an additional layer of polymerizable optical material is provided and is exposed to electromagnectic wave, thereby forming a second layer of the combination volume holographic element, wherein said combination volume holographic element diffracts light entering the lens to correct the ametropic conditions when the lens is placed on or in front of the eye. The term "optical lenses" as used herein indicates both ophthalmic lenses and spectacle lenses, unless otherwise indicated.

Additionally provided is a method for producing an optical lens for correcting ametropic conditions of an eye, which method includes the steps of exposing a holographic recording medium to electromagnetic waves, thereby forming a volume holographic element developing the exposed holographic recording medium and encapsulating said developed holographic recording medium in a biocompatible optical material, thereby forming said optical lens wherein the electromagnetic waves form a pattern of interference fringes of a volume grating structure while exposing a first layer of said holographic recording medium, thereby forming a first layer of a combination volume holographic element, wherein further an additional layer of an exposed holographic recording medium is provided forming a second layer of the combination volume holographic wherein said combibation volume holographic element diffracts light entering the lens to correct the ametropia, when the lens is placed on or in the eye.

The lenses produced by the methods of the present invention provides corrective powers for various ametropic conditions, including myopia, hyperopia, presbyopia and combinations thereof, and the lenses are designed to be used on, in or in front of a mammalian eye, more particularly a human eye. Additionally, the lens can be programmed to provide a wide variety of corrective powers, e.g., between +10 diopters and - 20 diopters, without changing the dimensions, e.g., thickness, of the lens.
Fig. 1 illustrates a corrective ophthalmic lens of the present invention.
Fig. 2 illustrates a method for producing a volume holographic optical element of the present invention.
Figs 3-3B illustrates a combination holographic optical element.

The present invention provides a method for producing ophthalmic lenses. The method is highly flexible such that a wide range of lenses having many different corrective powers and combinations of corrective powers can be produced, and the lenses produced by the method are highly suitable for correcting various ametropic conditions. Exemplary ametropic conditions that can be corrected with the present lens include myopia, hyperopia, presbyopia, regular and irregular astigmatisms and combinations thereof. In accordance with the present invention, the corrective ophthalmic lens is produced by programming in a corrective power in an optical lens material, and not by varying the dimensions of the lens, although dimensions of the lens can be varied to provide an additional or supplemental power. Unlike conventional corrective ophthalmic lenses, the ophthalmic lens produced by the method of the present invention does not rely or substantially rely on the changes in the dimensions, e.g., the thickness of the optical zone, of an ophthalmic lens to correct ametropic conditions. Consequently, a lens design that maximizes the comfort of the lens wearer can be used to correct many different ametropic conditions, without the dimensional design constraints of convention refractive lenses.

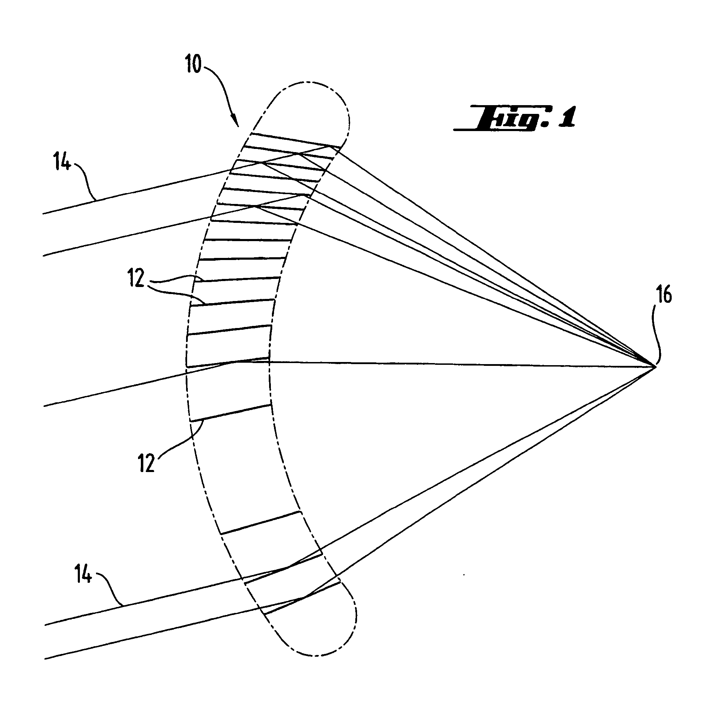

The ophthalmic lens utilizes the diffractive property of a holographic optical element (HOE), more particularly a transmission volume HOE, to provide a corrective power. The volume HOE contains interference fringe patterns that are programmed or recorded as a periodic variation in the refractive index of the optical material. The periodic variation in refractive index creates planes of peak refractive index, i.e., volume grating structure, within the optical element. The volume grating structure diffracts the light entering the HOE and, thus, the path of the light is modified and redirected to a desired direction. Fig. 1 illustrates the present invention with a corrective ophthalmic lens 10 for hyperopia. The lens 10 is an HOE which has a pattern of interference fringes 12. The pattern of interference fringes 12 directs the light 14, which enters the lens 10 from one side, to be focused to a focal point 16, which is located on the other side of the lens 10. In accordance with the present invention, the incoming light 14 preferably is diffracted by more than one interference fringe 12 and redirected to the focal point 16.

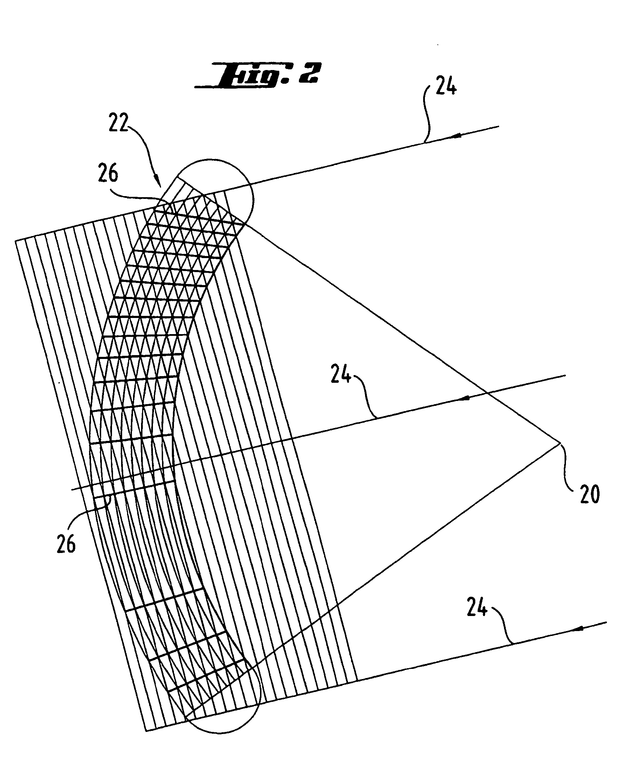

An exemplary process for producing an HOE according to the present invention is illustrated in Fig. 2. HOEs suitable for the present invention can be produced, for example, from polymerizable or crosslinkable optical materials and photographic hologram recording media. Suitable optical materials are further discussed below. Hereinafter, for illustration purposes, the term "polymerizable materials" is used to indicate both polymerizable materials and crosslinkable materials, unless otherwise indicated. Point-source object light 20 is projected to a photopolymerizable optical material (i.e., photopolymerizable HOE) 22, and collimated reference light 24 is simultaneously projected to the photopolymerizable HOE 22 such that the electromagnetic waves of the object light 20 and the reference light 24 form interference fringe patterns, which are recorded in the polymerizable optical material as it is polymerized. The photopolymerizable HOE 22 is a photopolymerizable material that is polymerized by both the object light and the reference light. Preferably, the object light and the reference light are produced from one collimated light source using a beam splitter. The two split portions of the light are projected toward the HOE 22, in which the path of the object light portion of the split light is modified to form a point-source light 24. The point-source object light 24 is provided, for example, by placing a conventional convex optical lens some distance away from the photopolymerizable HOE 22 such that one portion of the split light is focused on a desirable distance away from the HOE 22, i.e., on the point-source light position 20 of Fig. 2. A preferred light source is a laser source, more preferred is a U.V. laser source. Although the suitable wavelength of the light source depends on the type of HOE employed, preferred wavelength ranges are between 300nm and 600nm. When the photopolymerizable HOE 22 is fully exposed and polymerized, the resulting HOE contains a recorded pattern of interference fringes (i.e., volume grating structure 26). The polymerized HOE 22 has a focal point 20 which corresponds to the position of the point-source object light 20 when light enters the HOE from the opposite side of the focal point. In accordance with the present invention, the power of the ophthalmic lens can be changed, for example, by changing the distance and position of the object light 20. Fig. 2 provides an exemplary method for producing an HOE having a positive corrective power. As can be appreciated, HOEs having a negative corrective power can also be produced with the above-described HOE production set up with some modifications. For example, a convergent object light source that forms a focal point on the other side of the HOE away from the light source can be used in place of the point-source object light to produce an HOE having a negative corrective power. Similarly, other correctional needs can be accommodated by changing the configuration or pattern of the object and reference light sources, e.g., the HOE can be programmed to have corrective measures for the unequal and distorted corneal curvature of an irregular astigmatic condition by specifically designing the configurations of the object light and the reference light.

As discussed above, suitable HOEs can be produced from polymerizable or crosslinkable optical materials that can be relatively rapidly photopolymerized or photocrosslinked. A rapidly polymerizable optical material allows a refractive index modulation can be formed within the optical material, thereby forming the volume grating structure, while the material is being polymerized to form a solid optical material. Exemplary polymerizable optical materials suitable for the present invention are disclosed in U.S. Pat. No. 5,508,317 to Beat Müller and International Patent Application No. PCT/EP96/00246 to Mühlebach.
A preferred group of polymerizable optical materials, as described in U.S. Patent No. 5,508,317, are those that comprise a 1,3-diol basic structure in which a certain percentage of the 1,3-diol units have been modified to a 1,3-dioxane having in the 2-position a radical that is polymerizable but not polymerized. The polymerizable optical material is preferably a derivative of a polyvinyl alcohol having a weight average molecular weight, M_{w}, of at least about 2,000 that, based on the number of hydroxy groups of the polyvinyl alcohol, comprises from about 0.5% to about 80% of units of formula I : 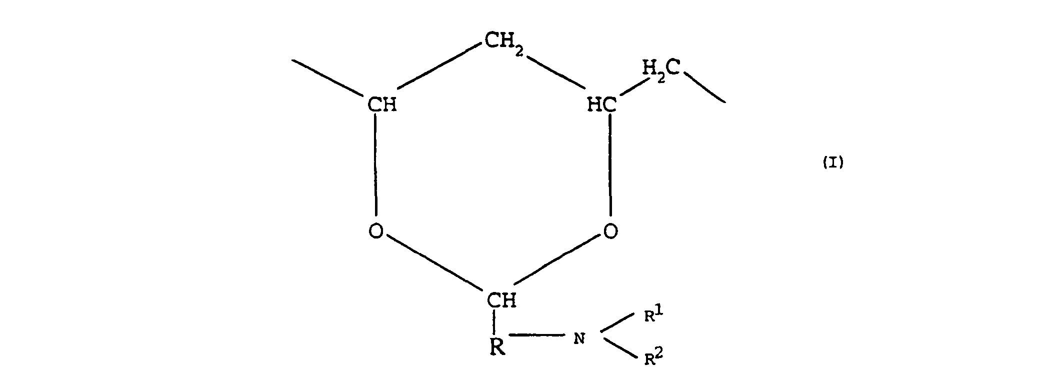 wherein:
R is lower alkylene having up to 8 carbon atoms,
R¹ is hydrogen or lower alkyl and
R² is an olefinically unsaturated, electron-attracting, copolymerizable radical preferably having up to 25 carbon atoms. R² is, for example, an olefinically unsaturated acyl radical of formula R³―CO―, in which
R³ is an olefinically unsaturated copolymerizable radical having from 2 to 24 carbon atoms, preferably from 2 to 8 carbon atoms, especially preferably from 2 to 4 carbon atoms.

In another embodiment, the radical R² is a radical of formula II

―CO―NH―(R⁴―NH―CO―O)_{q}―R⁵―O―CO―R³ (II)

wherein
q is zero or one; R⁴ and R⁵ are each independently lower alkylene having from 2 to 8 carbon atoms, arylene having from 6 to 12 carbon atoms, a saturated divalent cycloaliphatic group having from 6 to 10 carbon atoms, arylenealkylene or alkylenearylene having from 7 to 14 carbon atoms, or arylenealkylenearylene having from 13 to 16 carbon atoms; and R³ is as defined above.

Lower alkylene R preferably has up to 8 carbon atoms and may be straight-chained or branched. Suitable examples include octylene, hexylene, pentylene, butylene, propylene, ethylene, methylene, 2-propylene, 2-butylene and 3-pentylene. Preferably lower alkylene R has up to 6 and especially preferably up to 4 carbon atoms. Methylene and butylene are especially preferred. R¹ is preferably hydrogen or lower alkyl having up to seven, especially up to four, carbon atoms, especially hydrogen.

As for R⁴ and R⁵, lower alkylene R⁴ or R⁵ preferably has from 2 to 6 carbon atoms and is especially straight-chained. Suitable examples include propylene, butylene, hexylene, dimethylethylene and, especially preferably, ethylene. Arylene R⁴ or R⁵ is preferably phenylene that is unsubstituted or is substituted by lower alkyl or lower alkoxy, especially 1,3-phenylene or 1,4-phenylene or methyl-1,4-phenylene. A saturated divalent cycloaliphatic group R⁴ or R⁵ is preferably cyclohexylene or cyclohexylene-lower alkylene, for example cyclohexylenemethylene, that is unsubstituted or is substituted by one or more methyl groups, such as, for example, trimethylcyclohexylenemethylene, for example the divalent isophorone radical. The arylene unit of alkylenearylene or arylenealkylene R⁴ or R⁵ is preferably phenylene, unsubstituted or substituted by lower alkyl or lower alkoxy, and the alkylene unit thereof is preferably lower alkylene, such as methylene or ethylene, especially methylene. Such radicals R⁴ or R⁵ are therefore preferably phenylenemethylene or methylenephenylene. Arylenealkylenearylene R⁴ or R⁵ is preferably phenylene-lower alkylene-phenylene having up to 4 carbon atoms in the alkylene unit, for example phenyleneethylenephenylene. The radicals R⁴ and R⁵ are each independently preferably lower alkylene having from 2 to 6 carbon atoms, phenylene, unsubstituted or substituted by lower alkyl, cyclohexylene or cyclohexylene-lower alkylene, unsubstituted or substituted by lower alkyl, phenylene-lower alkylene, lower alkylene-phenylene or phenylene-lower alkylene-phenylene.

The polymerizable optical materials of the formula I be produced, for example, by reacting a polyvinylalcohol with a compound III, 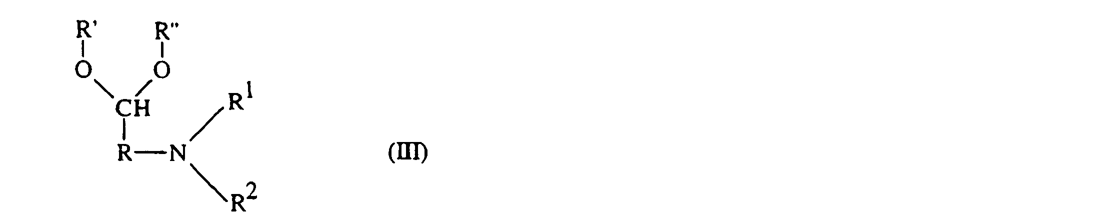 wherein R, R¹ and R² are as defined above, and R' and R" are each independently hydrogen, lower alkyl or lower alkanoyl, such as acetyl or propionyl. Desirably, between 0.5 and about 80% of the hydroxyl groups of the resulting the polymerizable optical material are replaced by the compound III:

Another group of exemplary polymerizable optical materials suitable for the present invention is disclosed in International Patent Application No. PCT/EP96/00246 to Mühlebach. Suitable optical materials disclosed therein include derivatives of a polyvinyl alcohol, polyethyleneimine or polyvinylamine which contains from about 0.5 to about 80%, based on the number of hydroxyl groups in the polyvinyl alcohol or the number of imine or amine groups in the polyethyleneimine or polyvinylamine, respectively, of units of the formula IV and V: 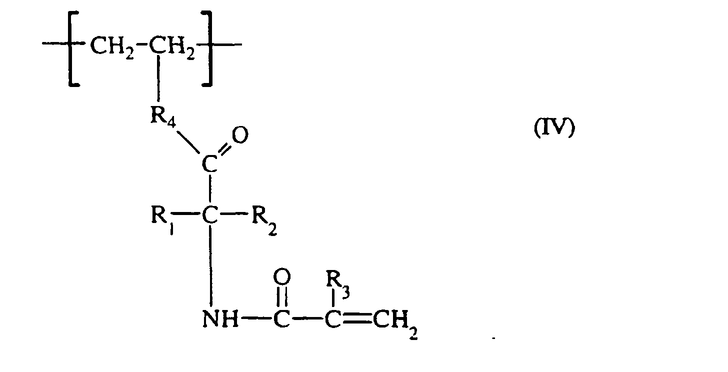 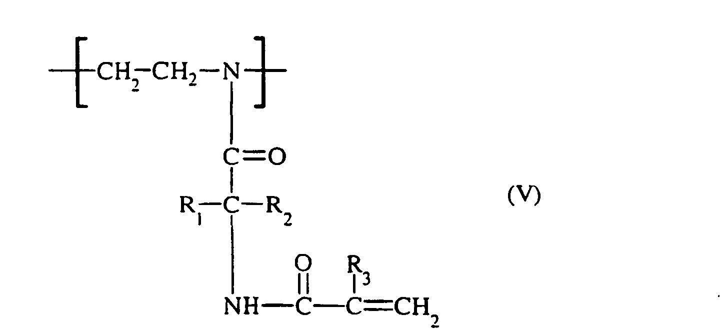 wherein R₁ and R₂ are, independently of one another, hydrogen, a C₁-C₈ alkyl group, an aryl group, or a cyclohexyl group, wherein these groups are unsubstitued or substituted; R₃ is hydrogen or a C₁-C₈ alkyl group, preferably is methyl; and R₄ is an -O- or -NH- bridge, preferably is -O-. Polyvinyl alcohols, polyethyleneimines and polyvinylamines suitable for the present invention have a number average molecular weight between about 2000 and 1,000,000, preferably between 10,000 and 300,000, more preferably between 10,000 and 100,000, and most preferably 10,000 and 50,000. A particularly suitable polymerizable optical material is a water-soluble derivative of a polyvinyl alcohol having between about 0.5 to about 80%, preferably between about 1 and about 25%, more preferably between about 1.5 and about 12%, based on the number of hydroxyl groups in the polyvinyl alcohol, of the formula III that has methyl groups for R₁ and R₂, hydrogen for R₃, -O- (i.e., an ester link) for R₄.

The polymerizable optical materials of the formulae IV and V can be produced, for example, by reacting an azalactone of the formula VI, 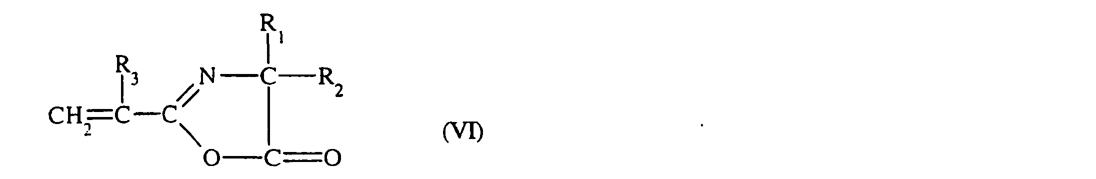 wherein R₁, R₂ and R₃ are as defined above, with a polyvinyl alcohol, polyethyleneimine or polyvinylamine at elevated temperature, between about 55°C and 75°C, in a suitable organic solvent, optionally in the presence of a suitable catalyst. Suitable solvents are those which dissolve the polymer backbone and include aproctic polar solvents, e.g., formamide, dimethylformamide, hexamethylphosphoric triamide, dimethyl sulfoxide, pyridine, nitromethane, acetonitrile, nitrobenzene, chlorobenzene, trichloromethane and dioxane. Suitable catalyst include tertiary amines, e.g., triethylamine, and organotin salts, e.g., dibutyltin dilaurate.

Another group of HOEs can be produced from conventional transmission volume holographic optical element recording media. As with the above-described polymerizable material, Point-source object light and collimated reference light are simultaneously projected onto an HOE recording medium such that the electromagnetic waves of the object and reference light form interference fringe patterns. The interference fringe pattern is recorded in the HOE medium. When the HOE recording medium is fully exposed, the recorded HOE medium is developed in accordance with a known HOE developing method. The developed HOE has a focal point that corresponds to the location of the point-source object light. Suitable transmission volume holographic optical element recording media include commercially available holographic photography recording materials or plates, such as dichromatic gelatins. Holographic photography recording media are available from various manufacturers, including Polaroid Corp.

When photographic recording media are used for the HOE of ophthalmic lenses, however, the presence of toxicological effects of the media on the ocular environment must be considered. Accordingly, when a conventional photographic HOE medium is used, it is preferred that the HOE be encapsulated in a biocompatible optical material. Suitable biocompatible optical materials include polymeric and non-polymeric optical materials that are useful for producing contact lenses, e.g., hard lenses, rigid gas permeable lenses and hydrogel lenses. Suitable hydrogel materials for hydrogel contact lenses typically have a cross-linked hydrophilic network and hold between about 35 % and about 75 %, based on the total weight of the hydrogel material, of water. Examples of suitable hydrogel materials include copolymers having 2-hydroxyethyl methacrylate and one or more comonomers such as 2-hydroxy acrylate, ethyl acrylate, methyl methacrylate, vinyl pyrrolidone, N-vinyl acrylamide, hydroxypropyl methacrylate, isobutyl methacrylate, styrene, ethoxyethyl methacrylate, methoxy triethyleneglycol methacrylate, glycidyl methacrylate, diacetone acrylamide, vinyl acetate, acrylamide, hydroxytrimethylene acrylate, methoxy methyl methacrylate, acrylic acid, methacrylic acid, glyceryl ethacrylate and dimethylamino ethyl acrylate. Other suitable hydrogel materials include copolymers having methyl vinyl carbazole or dimethylamino ethyl methacrylate. Another group of suitable hydrogel materials include crosslinkable materials that are disclosed in U.S. Patent No. 5,508,317, issued to Beat Müller, which is discussed above. Yet another group of highly suitable hydrogel materials include silicone copolymers disclosed in International Patent Application No. PCT/EP96/01265. Suitable rigid gas permeable materials for the present invention include cross-linked siloxane polymers. The network of such polymers incorporates appropriate cross-linkers such as N,N'-dimethyl bisacrylamide, ethylene glycol diacrylate, trihydroxy propane triacrylate, pentaerythtritol tetraacrylate and other similar polyfunctional acrylates or methacrylates, or vinyl compounds, e.g., N-m,ethylamino divinyl carbazole. Suitable rigid materials include acrylates, e.g., methacrylates, diacrylates and dimethacrylates, pyrolidones, styrenes, amides, acrylamides, carbonates, vinyls, acrylonitrieles, nitriles, sulfones and the like. Of the suitable materials, hydrogel materials are particularly suitable for the present invention.

An encapsulated ophthalmic lens containing a photographic HOE can be produced by fabricating an HOE containing a volume grating structure in accordance with the present invention, which HOE preferably has a sheet or thin disk or shell shape; placing the HOE in a biocompatible optical material; and then polymerizing the biocompatible optical material to form an encapsulated composite lens. The encapsulating and polymerizing steps can be conducted in a lens mold such that a fully formed composite lens is produced. As another embodiment, a button or block of an HOE-containing composite material is formed and then shaped to an ophthalmic lens using a lathing apparatus. As yet another embodiment, two layers of a polymerized biocompatible optical material can be laminated over both sides of a volume grating structure -containing HOE to form a composite ophthalmic lens of the present invention.

Suitable HOEs preferably have a diffraction efficiency of at least about 75%, more preferably at least about 80%, most preferably at least 95%, over all or substantially all wavelengths within the visible spectrum of light. Especially suitable HOEs for the present invention have a diffraction efficiency of 100% over all wavelengths of the spectrum of visible light when the Bragg condition is met. The Bragg condition is well known in the optics art, and it is, for example, defined in Coupled Wave Theory for Thick Hologram Gratings, by H. Kogelnik, The Bell System Technical Journal, Vol. 48, No. 9, p 2909-2947 (Nov. 1969).
HOEs having a lower diffraction efficiency than specified above can also be utilized.

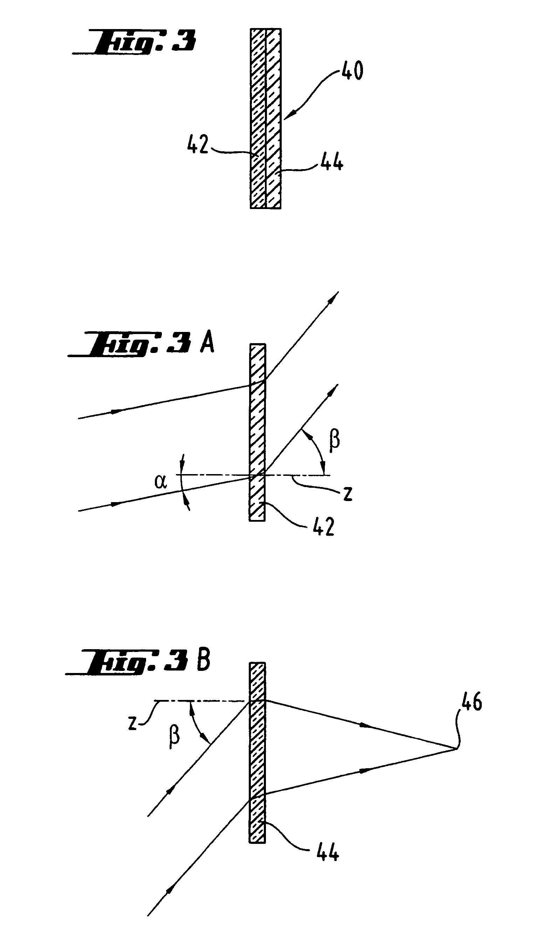

Suitable HOEs preferably are multilayer combination HOEs having at least two layers of HOEs since layering thin HOEs improves the diffractive efficiency and the optical quality of the HOE and enables the thickness of the HOE to be reduced. As is known in the ophthalmic art, an ophthalmic lens should have a thin dimensional thickness to promote comfort of the lens wearer. Accordingly, a dimensionally thin HOE is preferred. However, in order to provide an HOE having a high diffractive efficiency, the HOE has to be optically thick, i.e., the light is diffracted by more than one plane of the interference fringe pattern. One way to provide an optically thick and dimensionally thin HOE is programming the interference fringe pattern in a direction that is slanted towards the length of the HOE. Such slanted volume grating structure renders the HOE to have a large angular deviation between the incident angle of the incoming light and the exiting angle of the exiting light. However, an HOE having a large angular deviation may not be particularly suitable for an ophthalmic lens. For example, when such an HOE is placed on the eye, the line of sight is significantly bent away from the normal line of sight of the eye. This angular limitation in designing an HOE is addressed by utilizing a multilayer combination HOE especially a bilayer HOE. Figure 3 illustrates an exemplary combination HOE 40 made by the method of the present invention. Two dimensionally thin HOEs having a large angular deviation are fabricated into a combination HOE to provide a dimensionally thin HOE that has a small angular deviation. The multilayer HOE 40 has a dimensionally thin first HOE 42 and a thin second HOE 44. The first HOE 42 is programmed to diffract the incoming light such that when light enters the HOE at an angle α, the light exiting the HOE 42 forms an exiting acute angle β, which is larger than the incident angle α, as shown in Fig. 3A. Preferably, the first HOE has a thickness between about 10 µm and about 100 µm, more preferably between about 20 µm and about 90 µm, most preferably between about 30 µm and about 50 µm. The second HOE 44, Fig. 3B, is programmed to have a activating incident angle β that matches the exiting angle β of the first HOE 42. In addition, the second HOE 44 is programmed to focus the incoming light to a focal point 46 when the light enters within the activating angle β. Fig. 3B illustrates the second HOE 44. Preferably, the second HOE has a thickness between about 10 µm and about 100 µm, more preferably between about 20 µm and about 90 µm, most preferably between about 30 µm and about 50 µm.

When the first HOE 42 is placed next to the second HOE 44 and the incoming light enters the first HOE 42 at an angle that corresponds to the angle α, the path of the light exiting the combination HOE 40 is modified and the light is focused to the focal point 46. By utilizing a multilayer combination HOE, a dimensionally thin HOE having a high diffractive efficiency and a small angular deviation can be produced. In addition to the high diffractive efficiency and small angular deviation advantages, utilizing a multilayer HOE provides other additional advantages, which include correction of dispersion aberration and chromatic aberration. A single HOE may produce images having dispersion and chromatic aberrations since visual light consists of a spectrum of electromagnetic waves having different wave lengths and the differences in wavelengths may cause the electromagnetic waves to diffract differently by the HOE. It has been found that a multilayer, especially bilayer, HOE can counteract to correct these aberrations that may be produced by a single layer HOE. Accordingly, a multilayer combination HOE is preferred.

The ophthalmic lens production method of the present invention is a highly flexible method that can be used to produce ophthalmic lenses having a wide range of corrective powers and that produces ophthalmic lenses that are designed to promote the comfort of the lens wearer. Unlike conventional ophthalmic lenses, the correctional power or powers of the present ophthalmic provides the corrective power or powers by programming suitable powers into the lens, even without the need for changing dimensions of the lens. In addition, the manufacturing set up does not have to be changed substantially when the set up is changed to produce lenses having different corrective powers. As discussed above, different corrective powers can be programmed into the ophthalmic lens by, for example, changing the distance, pattern and/or configuration of the object light and the reference light. Accordingly, the lens production process is highly simplified. Additional advantages include the fact that ophthalmic lens manufacturers do not need to have different lens manufacturing equipment and methods to produce a wide range of different lenses having different corrective powers. Accordingly, ophthalmic lens manufacturers do not need to produce and carry a large number of different ophthalmic lenses having different configurations and/or dimensions.

It is to be noted that although the present invention is described in conjunction with ophthalmic lenses, corrective spectacle lenses having a volume HOE can be produced in accordance with the present invention. For example, a dimensionally thin film of an HOE, which is programmed to provide a corrective power, can be laminated on a plano spectacle lens. Such spectacle lenses, i.e., eyeglass lenses, can be designed to promote the comfort of the wearer without sacrificing the corrective efficacy of the lenses since the corrective HOE lens does not rely on the thickness of the lens to provide the corrective power, as discussed above.

The present invention is further illustrated with the following example. However, the example is not to be construed as limiting the invention thereto.

### Example

About 0.06 ml of the Nelfilcon A lens monomer composition is deposited in the center portion of a female mold half, and a matching male mold half is placed over the female mold half, forming a lens mold assembly. The lens mold is designed to produce a plano lens. The male mold half does not touch the female mold half, and they are separated by about 0.1 mm. The lens mold halves are made from quartz and are masked with chrome, except for the center circular lens portion of about 15 mm in diameter. Briefly, Nelfilcon A is a product of a crosslinkable modified polyvinyl alcohol which contains about 0.48 mmol/g of an acryamide crosslinker. The polyvinyl alcohol has about 7.5 mol % acetate content. Nelfilcon A has a solid content of about 31 % and contains about 0.1 % of a photoinitiator, Durocure® 1173. The closed lens mold assembly is placed under a laser set up. The laser set up provides two coherent collimated U.V. laser beams having 351 nm wavelength, in which one beam is passed through a optical convex lens so that the focal point is formed at 500 mm away from the lens mold assembly. The focused light serves as a point-source object light. The angle formed between the paths of the object light and the reference light is about 7°. The set up provides an HOE that is programmed to have a corrective power of 2 diopters. The lens monomer composition is exposed to the laser beams having about 0.2 watts for about 2 minutes to completely polymerize the composition and to form interference fringe patterns. Since the lens mold is masked except for the center portion, the lens monomer exposed in the circular center portion of the mold is subjected to the object light and the reference light and polymerized.

The mold assembly is opened, leaving the lens adhered to the male mold half. About 0.06 ml of the Nelfilcon A lens monomer composition is again deposited in the center portion of the female mold half, and the male mold half with the adhered lens is placed over the female mold half. The male and female mold halves are separated by about 0.2 mm. The closed mold assembly is again exposed to the laser set up, except that the optical convex lens is removed from the object light set up. The monomer composition is again exposed to the laser beams for about 2 minutes to completely polymerize the composition and to form a second layer of interference fringe patterns. The resulting composite lens has an optical power of +2 diopters.

## Claims

1. A method for producing an optical lens for correcting ametropic conditions, said lens having a front curve and a base curve, which method comprises the steps of:
introducing a polymerizable optical material in a mold for an optical lens; and
exposing said polymerizable material in said mold to electromagnetic waves, thereby forming a volume holographic element,
wherein said electromagnetic waves form a pattern of interference fringes while polymerizing a first layer of said polymerizable material, thereby recording said interference fringe pattern in said first layer to form a volume grating structure, thus forming a first layer (42) of a combination volume holographic element (40),
wherein further an additional layer of polymerizable optical material is provided and is exposed to electromagnetic waves, thereby forming a second layer (44) of the combination volume holographic element (40),
wherein said combination volume holographic element (40) diffracts light entering said front curve to correct said ametropic conditions when the lens is placed on, in or in front of an eye.

2. A method according to claim 1, wherein said electromagnetic waves are laser beams.

3. A method according to claim 2, wherein said laser beams are U.V. laser beams.

4. A method for producing an ophthalmic lens for correcting ametropic conditions of an eye, said ophthalmic lens having a front curve and a base curve, which method comprises the steps of:
exposing a holographic recording medium to electromagnectic waves, thereby forming a volume holographic element,
developing the exposed holographic recording medium, and
encapsulating said developed holographic recording medium in a biocompatible optical material, thereby forming said ophthalmic lens,
wherein said electromagnetic waves form a pattern of interference fringes of a volume grating structure while exposing a first layer of said holographic recording medium, thereby forming a first layer (42) of a combination volume holographic element (40),
wherein further an additional layer of an exposed holographic recording medium is provided forming a second layer (44) of the combination volume holographic element (40),
wherein said combination volume holographic element (40) diffracts light entering said front curve to correct said ametropic conditions when the lens is placed on or in the eye.

5. A method according to claim 4, wherein said electromagnetic waves are laser beams.

6. A method according to claim 5, wherein said laser means are U.V. laser beams.

## Patentansprüche

1. Verfahren zur Herstellung einer optischen Linse zum Korrigieren von ametropen Zuständen, wobei die Linse eine Vorderkrümmung und eine Grundkrümmung aufweist, wobei das Verfahren die Schritte umfasst von:
Einführen eines polymerisierbaren, optischen Materials in eine Form für eine-optische Linse; und
Aussetzen des polymerisierbaren Materials in der Form elektromagnetischen Wellen, wodurch sich ein volumenholographisches Element bildet,
wobei die elektromagnetischen Wellen ein Muster von Interferenzstreifen bilden, während eine erste Schicht des polymerisierbaren Materials polymerisiert, wodurch das Interferenzstreifenmuster in der ersten Schicht zur Bildung einer Volumengitterstruktur aufgezeichnet wird, womit eine erste Schicht (42) eines Kombinations-volumenholographischen Elements (40) gebildet wird,
wobei weiterhin eine zusätzliche Schicht von polymerisierbarem, optischem Material bereitgestellt wird und elektromagnetischen Wellen ausgesetzt wird, wodurch eine zweite Schicht (44) des Kombinations-volumenholographischen Elements (40) gebildet wird,
wobei das Kombinations-volumenholographische Element (40) Licht, das in die Vorderkrümmung gelangt, bricht, um die ametropen Bedingungen zu korrigieren, wenn die Linse auf, in oder vor einem Auge angeordnet wird.

2. Verfahren nach Anspruch 1, wobei die elektromagnetischen Wellen Laserstrahlen sind.

3. Verfahren nach Anspruch 2, wobei die Laserstrahlen UV-Laserstrahlen sind.

4. Verfahren zur Herstellung einer ophthalmischen Linse zum Korrigieren von ametropen Bedingungen eines Auges, wobei die ophthalmische Linse eine Vorderkrümmung und eine Grundkrümmung aufweist, wobei das Verfahren die Schritte umfasst von:
Aussetzen eines holographischen Aufzeichnungsmediums elektromagnetischen Wellen, wodurch ein volumenholographisches Element gebildet wird,
Entwickeln des ausgesetzten, holographischen Aufzeichnungsmediums und
Einkapseln des entwickelten holographischen Aufzeichnungsmediums in ein bioverträgliches, optisches Material, wodurch die ophthalmische Linse gebildet wird,
wobei die elektromagnetischen Wellen ein Interferenz-Streifenmuster von einer Volumengitterstruktür bilden, während eine erste Schicht des holographischen Aufzeichnungsmediums exponiert wird, wodurch eine erste Schicht (42) eines Kombinations-volumenholographischen Elements (40) gebildet wird,
wobei weiterhin eine zusätzliche Schicht eines exponierten holographischen Aufzeichnungsmediums bereitgestellt wird, zur Bildung einer zweiten Schicht (44) des Kombinations-volumenholographischen Elements (40),
wobei das Kombinations-volumenholographische Element (40) Licht, das in die Vorderkrümmung gelangt, bricht, um die ametropen Bedingungen zu korrigieren, wenn die Linse auf oder in dem Auge angeordnet wird.

5. Verfahren nach Anspruch 4, wobei die elektromagnetischen Wellen Laserstrahlen sind.

6. Verfahren nach Anspruch 5, wobei die Lasermittel UV-Laserstrahlen sind.

## Revendications

1. Méthode de production d'une lentille optique destinée à corriger les troubles amétropes, ladite lentille présentant une courbe frontale et une courbe de base et ladite méthode consistant à :
- introduire un matériau optique polymérisable dans un moule de fabrication d'une lentille optique ; et
- exposer ledit matériau optique polymérisable placé dans ledit moule, à des ondes électromagnétiques qui permettent de former un élément holographique de volume,
**caractérisée en ce que** lesdites ondes électromagnétiques forment un modèle de franges d'interférence tout en polymérisant une première couche dudit matériau polymérisable, enregistrant par conséquent ledit modèle de franges d'interférence dans ladite première couche afin de former une structure de réseau en volume et de former par la même une première couche (42) d'un élément holographique de volume sous forme de combinaison (40),
**caractérisée en ce qu'**une couche supplémentaire de matériau optique polymérisable est ajoutée et est exposée à des ondes électromagnétiques, formant ainsi une seconde couche (44) de l'élément holographique de volume sous forme de combinaison (40),
**caractérisée en ce que** ledit élément holographique de volume sous forme de - combinaison (40) diffracte la lumière entrant par ladite courbe frontale afin de corriger lesdits troubles amétropes lorsque la lentille est placée sur, dans ou face à un oeil.

2. Méthode selon la revendication 1, **caractérisée en ce que** lesdites ondes électromagnétiques sont des faisceaux laser.

3. Méthode selon la revendication 2, **caractérisée en ce que** lesdits faisceaux laser sont des faisceaux laser U.V.

4. Méthode de production d'une lentille ophtalmique destinée à corriger les troubles amétropes d'un oeil, ladite lentille présentant une courbe frontale et une courbe de base et ladite méthode consistant à :
- exposer un support d'enregistrement holographique à des ondes électromagnétiques qui permettent de former un élément holographique de volume,
- développer le support d'enregistrement holographique exposé, et
- encapsuler ledit support d'enregistrement holographique développé dans un matériau optique biocompatible permettant, par conséquent, de former ladite lentille ophtalmique,
**caractérisée en ce que** lesdites ondes électromagnétiques forment un modèle de franges d'interférence d'une structure de réseau en volume tout en exposant une première couche dudit support d'enregistrement holographique, formant, par conséquent, une première couche (42) d'un élément holographique de volume sous forme de combinaison (40),
**caractérisée en ce que** une couche supplémentaire d'un support d'enregistrement holographique exposé est prévue et permet de former, par conséquent, une seconde couche (44) de l'élément holographique de volume sous forme de combinaison (40),
**caractérisée en ce que** ledit élément holographique de volume sous forme de combinaison (40) diffracte la lumière entrant par ladite courbe frontale afin de corriger lesdits troubles amétropes lorsque la lentille est placée sur ou dans un oeil.

5. Méthode selon la revendication 4, **caractérisée en ce que** lesdites ondes électromagnétiques sont des faisceaux laser.

6. Méthode selon la revendication 5, **caractérisée en ce que** lesdits faisceaux laser sont des faisceaux laser U.V.
